Europäisches Patentamt

European Patent Office

Office européen des brevets

(11) Publication number: **0 447 371 A2**

# EUROPEAN PATENT APPLICATION

(21) Application number: 91830073.2

(51) Int. Cl.⁵: **B27B 5/32, B23C 5/26**

(22) Date of filing: 06.03.91

(30) Priority: **12.03.90 IT 933790**

(43) Date of publication of application:
**18.09.91 Bulletin 91/38**

(84) Designated Contracting States:
**AT DE ES FR**

(71) Applicant: **EUROMAC S.P.A.**
**Via Montetrini 2e, Frazione Molino del Piano**
**I-50065 Pontassieve, Firenze(IT)**

(72) Inventor: **Dini, Renzo**
**Via della Torre n.31/c, I-50060 Molin del**
**Piano**
**Pontassieve, Firenze(IT)**

(74) Representative: **Mannucci, Gianfranco,**
**Dott.-Ing. et al**
**Ufficio Tecnico Ing. A. Mannucci Via della**
**Scala 4**
**I-50123 Firenze(IT)**

(54) **Device for adjusting the axial position of a rotary tool.**

(57) The device for adjusting the position of a rotary tool comprises a sleeve (19) for receiving bearings (15, 17) for the support of a rotating spindle (5) and means (25) for connecting said sleeve to the frame of the machine tool; the sleeve (19) is engaged to an element (37) sliding within a seat (33), and the sliding of said element (39) causes an axial displacement of the sleeve (19) with respect to the frame of the machine tool.

FIG.2

The invention relates to an apparatus for adjusting the axial position of a rotary tool, for example an engraving tool, a cutting tool or the like, for a machine tool such as a sawing machine for wood panels or similar materials or similar machines. More particularly, the invention refers to an apparatus of the type comprising a sleeve or bush for housing bearings for the support of a rotating spindle and means for connecting said support sleeve to the frame of the machine tool, said connection means being able to adjust the axial position of the sleeve and thus of the spindle with respect to the machine framework.

In many machine tools, such as the sawing machines for wood or the like, it is necessary to axially position a spindle carrying a rotating tool, for example an engraving tool or a cutting blade. In particular, in the wood sawing machines it is often necessary to work a single piece with two tools, for example a cutting tool which acts from above on the piece being worked and an engraving tool which acts on the same piece from below and in a slightly advanced position with respect to the cutting tool. To obtain a perfect cut it is necessary that these two tools be perfectly aligned. In other situations there is the need of working the same piece with two cutting tools so that also in this case, for an accurate cut of the piece, it is necessary that the two cutting tools be perfectly aligned. Devices are known allowing the axial displacement of at least one of the two machine toolholder spindles and the subsequent locking thereof so as to achieve a perfect alignment of the two tools. In the wood sawing machines, devices are presently used for the alignment of the engraving tool with respect to the cutting tool, said devices comprising a sleeve wherein the spindle-supporting bearings are housed, which sleeve is externally threaded and is inserted into a hole of a bearing element solid to the framework of the machine tool. The locking of the sleeve and thus of the spindle supported therein takes place by means of two threaded ring nuts which are screwed on the external threading of the sleeve and are tightened on opposite sides of said bearing element, wherein the said sleeve is inserted. The adjustment of the axial position of the sleeve and thus of the sleeve-supporting spindle is performed by unscrewing one of the two ring nuts and by screwing the opposite one. An apparatus of this type has many drawbacks. Firstly, it requires access to both the sleeve-tightening ring nuts on the machine framework in order to act on them and thus adjust the sleeve position. This implies the need of gaining access not only from the tool side but also from the side opposite thereto In addition, the adjustment is particularly difficult, as it is necessary to simultaneously act on two screw members which serve both for clamping and releasing the sleeve with respect to the machine framework, and also for adjusting the position of same sleeve. It should be also taken into account that, as the adjustment of the position of the sleeve and thus of the spindle implies the loosening of the sleeve from the machine framework and then a partial disengagement of the spindle from the same machine, the adjustment must take place with the machine at a standstill, especially when considering the difficulty of reaching the two locking and adjusting ring nuts.

It is an object of the invention to provide an device allowing an easy and quick adjustment of the axial position of a rotary tool also during the running of the machine. It is a further object of the invention to provide a device allowing a quick and safe adjustment of the tool without any problem of accessibility to the tool-supporting device.

These and further objects which will be evident to those skilled in the art after a reading of the following description, are achieved with a device of the above mentioned type, characterized substantially in that the sleeve is engaged to an element sliding within a seat fixed with respect to the frame of the machine tool, the sliding of said element causing an axial displacement of the sleeve with respect to the frame of the machine tool. When the sleeve is not clamped, a slide of the sliding element within its seat, being achieved for example by screw means to facilitate an accurate adjustment, allows the axial position of the spindle, and thus of the tool, to be easily adjusted. Then, the sleeve is again clamped upon reaching the desired position.

In a practical embodiment of the invention, the means for connecting the sleeve to the frame of the machine tool comprise a support with a housing for the sleeve and means for tightening the sleeve within the housing, said seat being formed in said support. The support may be made, for example, in two portions elastically connected to each other, with screw tightening means or similar means which clamp the two portions one against the other thereby locking the sleeve disposed therebetween.

Advantageously, the seat for said sliding element may be inclined with respect to the axis of the spindle. In this way, with a sufficient inclination, it is possible to bring the position-adjusting means to a more accessible location, for example with access from above at right angle to the spindle axis.

In a particularly advantageous embodiment of the device according to the invention, the sliding element is housed within a dead hole, whereby the sliding element cooperates with screw means for the adjustment of the position.

Other particularly advantageous embodiments are set forth in the appended dependent claims.

The invention will be better understood by following the description and the attached drawing, which shows a practical, not limiting exemplification of the same invention. In the drawing:

Fig. 1 shows a longitudinal section on line I-I in Fig. 2 of the spindle group for the driving of an engraving tool in a wood sawing machine, with a device according to the invention for the adjustment of the axial position of the tool:

Fig. 2 is a partial side view on line II-II of Fig. 1; and

Fig. 3 shows, in reduced scale, a side view of the block for anchoring the spindle-tool assembly to the framework of the machine tool.

In the example of the drawing, the device according to the invention is illustrated as applied to an engraving tool for cutting wood panels, but it is evident that the same device may be applied also to other tools, for example to cutting tools such as disk saws or other.

Numeral 3 indicates an engraving tool carried by a toolholder unit 4 attached to a spindle 5. The spindle is hollow and a screw 7, made to pass therewithin, is engaged at one end, to a pin 9 for the locking of the toolholder unit 4, while at the other end it protrudes from the spindle 5 to allow the screwing and unscrewing operation in order to lock and release the tool on the spindle. The device for clamping the tool on the spindle is described in greater detail in a copending patent application filed on the same date of the same applicant and is not described herein in greater detail.

The spindle 5 is actuated by a toothed belt entrained on a pulley 11 engaged to a spindle through a tongue 13. The spindle is supported by two bearings 15, 17 housed within a sleeve or bush 19 which is intended to engage the spindle-tool assembly to the framework of the machine tool. The two bearings 15, 17 are tightened, with the interposition of a ring spacer 21, by a ring nut 23 screwed over the threaded rear portion of the spindle 5.

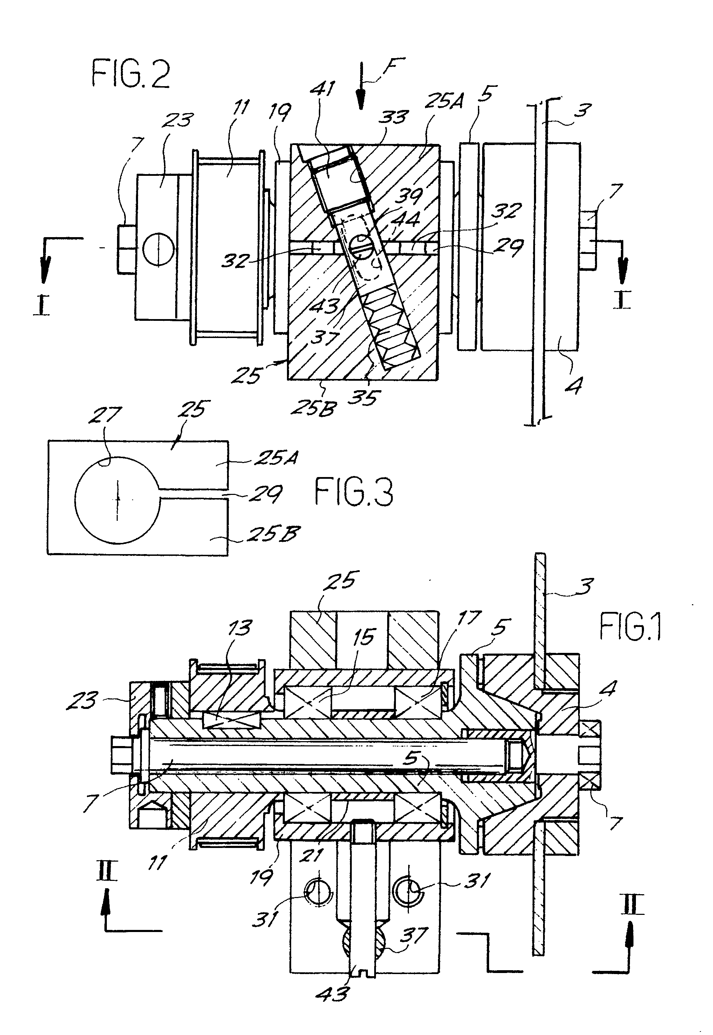

The spindle 19 is inserted in a block or support designated 25 and separately shown in side view in Fig. 3. The support 25 is provided with a large transverse hole 27 within which the sleeve 19 is housed, and with a cut 29 which divides the support 25 into two parts 25A, 25B and makes the support so resilient as to allow the clamping of sleeve 19 inside the transverse hole 27 with an elastic deformation of the said support. To clamp the sleeve 19 within the hole 27, and thus the spindle-tool unit on the machine which the support 25 is made solid to, the support 25 is provided with two threaded holes 31 wherein two corresponding locking screws 32 are engaged (Fig. 2).

The support 25 is further provided with a diagonal dead hole 33 which passes through the two portions 25A, 25B of the support 25. Located inside said dead hole 33 are the following members: a pack of Belleville springs 35 resting on the bottom of hole 33; a cylindrical sliding element 37 with a hole developing transversely to the axis of the sliding element 37; and a dowel 41 screwed in the threaded outer portion of hole 33. Engaged in the hole 39 of the sliding element 37 is one end of a stem 43 whose opposite threaded end engages a correspondent threaded hole of sleeve 19. The stem 43 goes through a slot 44 which is formed in the two portions 25A, 25B of the support 25 and is disposed parallel to the axis of the dead hole 33.

To adjust the axial position of the spindle 5 and thus of the tool 3, the procedure is as follows. Firstly, the screws 32 are unscrewed. In this way, the sleeve 19 which carries the spindle 5 is able to freely move axially within the hole 27, and its movement is prevented only by the presence of the stem 43 being engaged, at one end, to the sleeve 19 and, at the opposite end, to the sliding element 37 housed in the hole 33. At this point, by acting on the dowel 41 it is possible to move the sliding element 37 axially along the dead hole 33. This movement causes the stem 43 to slide within the slot 44 and, therefore, owing to the inclination of the hole 33 and thus to the trajectory followed by the sliding element 39, the stem 43 causes a rotation of sleeve 19 about its axis and an axial displacement of the same sleeve 19 inside the hole 27 in which it is housed. Screwing down the dowel 41 causes a greater projection of tool 3 with respect to the support 25 while unscrewing the same dowel 41 causes, owing to the effect of the Belleville springs 35, an opposite displacement.

Since the spindle 5 remains firmly in position, in spite of the slight unscrewing necessary to displace the sleeve 19, the adjustment may take place also with the machine in running condition. Moreover, the adjustment does not require anything but the accessibility from above, in the direction of arrow F, insofar as from this side, both the adjusting dowel 41 and the locking screws 32 can in fact be reached.

It is understood that the drawing shows an exemplification given only as a practical demonstration of the invention, as this may vary in the forms and dispositions without nevertheless coming out from the scope of the idea on which the same invention is based. The possible presence of reference numbers in the appended claims has the purpose to facilitate the reading of the claims, reference being made to the description and the drawing, and does not limit the scope of the protection represented by the claims.

**Claims**

1. Device for adjusting the position of a rotary tool comprising a sleeve (19) for receiving bearings (15, 17) for supporting a rotating spindle (5 ), and means (25) for connecting said sleeve to the frame of the machine tool, characterized in that the sleeve (19) is engaged to an element (37) sliding within a seat (33), the sliding of said element (39) causing an axial displacement of the sleeve (19) with respect to the frame of the machine tool.

2. Device according to claim 1, characterized in that said means for connecting the sleeve (19) to the frame of the machine tool comprise a support (25) with a housing (27) for the sleeve and means (32) for clamping the sleeve (19) inside the housing (27), said seat (33) being formed in said support (25).

3. Device according to claim 1 or 2, characterized in that said seat (33) for said sliding element (37) is inclined with respect to the axis of the spindle (5).

4. Device according to one or more of the preceding claims, characterized in that said sliding element (37) is housed within a dead hole (33), said sliding element (37) cooperating with screw means (41) for adjusting the position of the tool.

5. Device according to claim 4, characterized in that said sliding element (37) is interposed between an elastic member (35) and a screw element (41) for adjusting the position of said tool.

6. Device according to one or more of claims 2 to 5, characterized in that the support (25) for the sleeve (19) is provided with two portions (25A, 25B) elastically engaged to one another, and in that the means (32) for clamping the sleeve tighten said two portions (25A, 25B) one against the other.

7. Device according to claims 2 and 4, characterized in that the clamping means (32) for the sleeve (19) and the screw menas (41) for the adjustment of the sliding element (37) are disposed on the same side of said support (25).

8. Machine tool comprising a spindle carrying a rotating tool and means for adjusting the position of said tool in a direction parallel to the spindle axis, characterized in that it comprises a device for adjusting the position of the tool according to one or more of claims 1 to 7

FIG.2

FIG.3

FIG.1